(19) Europäisches Patentamt

European Patent Office

Office européen des brevets

(11) Veröffentlichungsnummer : **0 342 272 B1**

(12) **EUROPÄISCHE PATENTSCHRIFT**

(45) Veröffentlichungstag der Patentschrift :
**17.04.91 Patentblatt 91/16**

(21) Anmeldenummer : **88120944.9**

(22) Anmeldetag : **15.12.88**

(51) Int. Cl.⁵ : **C04B 11/00, C04B 28/14,
C04B 11/024, // (C04B28/14,
24:06)**

(54) **Verfahren zum Aufbereiten von Calciumsulfat-Alphahalbhydrat.**

(30) Priorität : **14.05.88 DE 3816513**

(43) Veröffentlichungstag der Anmeldung :
**23.11.89 Patentblatt 89/47**

(45) Bekanntmachung des Hinweises auf die
Patenterteilung :
**17.04.91 Patentblatt 91/16**

(84) Benannte Vertragsstaaten :
**AT BE CH DE ES FR GB GR IT LI LU NL SE**

(56) Entgegenhaltungen :
**EP-A- 0 258 064
DE-A- 2 433 554
DE-A- 3 048 506
DE-A- 3 612 931
DE-C- 800 548
FR-A- 2 238 681
US-A- 3 305 518
US-A- 3 666 581**

(56) Entgegenhaltungen :
**CHEMICAL ABSTRACTS, Band 89, 1978, Seite
325, Nr. 203034z, Columbus, Ohio, US; & JP-
A-78 79 924 (SUMITOMO CHEMICAL CO., LTD)
14-07-1978
Fritz KEIL: "ZEMENT Herstellung und Eigenschaften", Springer-Verlag Berlin-Heidel-
berg-New York, 1971**

(73) Patentinhaber : **Pro Mineral Gesellschaft zur
Verwendung
Kruppstrasse 5
W-4300 Essen 1 (DE)**
Patentinhaber : **SICOWA Verfahrenstechnik
für Baustoffe GmbH & Co. KG
Handerweg 17
W-5100 Aachen (DE)**

(72) Erfinder : **Koslowski, Thomas Dr. Dipl.-Min.
Buschmühle 1
W-5100 Aachen (DE)**

(74) Vertreter : **Andrejewski, Walter et al
Patentanwälte Andrejewski, Honke & Partner
Postfach 10 02 54 Theaterplatz 3
W-4300 Essen 1 (DE)**

## Beschreibung

Die Erfindung betrifft ein Verfahren zum Aufbereiten von Calciumsulfat-Alphahalbhydrat.

Zur Herstellung von Calciumsulfat-Alphahalbhydrat sind verschiedene Verfahren bekannt, und zwar sogenannte Naßverfahren, bei denen Rohgips in Form einer Suspension kontinuierlich durch einen Autoklaven gefördert und in Calciumsulfat-Alphahalbhydrat umgesetzt wird, sowie Autoklavierverfahren, bei denen der Rohgips stückig oder als Formkörper in einen Autoklaven eingebracht und umgesetzt wird. Beispielsweise bei der Herstellung von Calciumsulfat-Alphahalbhydrat aus Rohgips, der aus Kraftwerksentschwefelungsanlagen stammt und zu Formkörpern verpreßt wurde, ist es möglich, nach dem Autoklavieren große und regelmäßige Kristalle (Primärkorn) aus Calciumsulfat-Alphahalbhydrat zu erhalten. Die aus Primärkorn bestehenden Formkörper werden in einer Brecheinrichtung verkleinert und so das Primärkorn zu einem grobkörnigen Produkt mit einer spezifischen Oberfläche von beispielsweise 800 cm²/g vereinzelt.

Derartiges grobkörniges Calciumsulfat-Alphahalbhydrat stellt an sich ein hochwertiges Produkt aufgrund seines geringen Wasseranspruches bei seiner Verwendung zur Herstellung von Mörteln o.dgl. dar. Jedoch führt das Grobkorn nicht zu einer schnellen Festigkeitsentwicklung, da der Umsatz pro Zeiteinheit des Grobkorns mit Wasser relativ gering bzw. unvollständig ist. Um diesen Umsatz zu beschleunigen, können übliche Beschleuniger eingesetzt werden. Jedoch haben diese den Nachteil, das sie zum sofortigen Einsetzen der Festigkeitsentwicklung führen. Zwar läßt sich dies durch zusätzliche Wasserzufuhr mildern, jedoch ist gerade zusätzliches Anmachwasser unerwünscht. Außerdem benötigt man normalerweise eine genügende Vorhaltezeit, um den Mörtel anzumachen und an den dafür vorgesehen Ort auszutragen.

Aufgabe der Erfindung ist es daher, ein Verfahren der eingangs genannten Art zu schaffen, das die Herstellung eines Calciumsulfat-Alphahalbhydrats ermöglicht, das einen genügend verzögerten Versteifungsbeginn besitzt und trotzdem zu einer schnellen Festigkeitsentwicklung und auf ein hohes Festigkeitsniveau führt.

Diese Aufgabe wird mit den Maßnahmen im Kennzeichen des Anspruchs 1 gelöst.

Durch Mahlen des grobkörnigen Ausgangsprodukts werden spezifische Oberflächen im Bereich von etwa 1200 bis 4000 cm²/g. insbesondere 1500 bis 3500 cm²/g eingestellt. Durch das Sichten läßt sich eine bestimmte Körnungslinie einstellen, so daß sowohl Feinstkorn als auch gröberes Korn eliminiert sind. Feinstkorn ist sehr reaktiv und hat einen großen Wasserbedarf, so daß hierdurch die gewünschten Eigenschaften beeinträchtigt würden. Gröberes Korn hat zwar keinen großen Wasserbedarf, ist dafür aber auch nicht genügend reaktiv.

Die Fruchtsäuren, etwa Apfel- oder Weinsäure, insbesondere Zitronensäure, bzw. deren wasserlösliche Salze, die einzeln oder in Mischung eingesetzt werden können, verzögern den Versteifungsbeginn und dienen gleichzeitig als Verflüssiger, dessen Wirkung sofort einsetzt, wenn das Calciumsulfat-Alphahalbhydrat mit dem Anmachwasser in Berührung gelangt. Abgesehen davon wird hierdurch die Druckfestigkeit erheblich gesteigert.

Letzteres ist insofern überraschend, als Zitronensäure bisher als festigkeitserniedrigender vorzögernder Zusatz galt, wenn sie in kleinen Mengen unter 0,1 M.-% eingesetzt wird, während sie in größeren Mengen eine Verfestigung sogar verhindert, vgl. Ullmanns Encyklopädie der technischen Chemie, 4. Auflage, Band 12, S. 307 sowie R.A. Kuntze, The Chemistry and Technology of Gypsum, ASTM Special Technical Publication 861, 1984, so daß Zitronensäure ebenso wie die verwandten anderen Fruchtsäuren bisher unerwünscht waren.

Die Fruchtsäure wird in einer Menge von 0,005 bis 0,05 M.-%, vorzugsweise in einer Menge von etwa 0,02 M.-% eingesetzt, etwa als Zitronensäuremonohydrat.

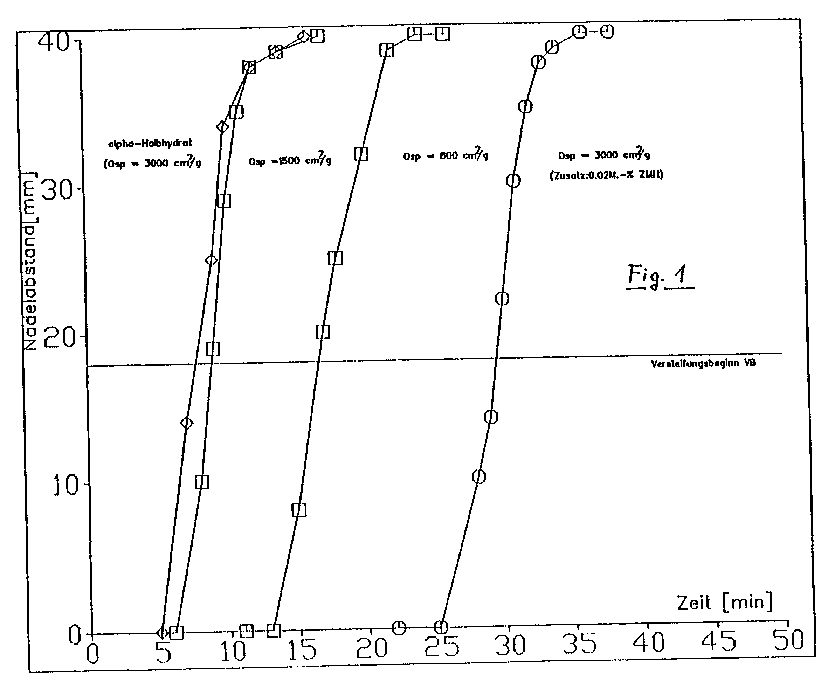

In Fig. 1 ist diagrammartig das Versteifen von Calciumsulfat-Alphahalbhydratpasten in Abhängigkeit von der Mahlfeinheit aufgetragen, wobei auf der Ordinate der Nadelabstand in mm eines Vicat-Geräts in Anlehnung an DIN 1168 und auf der Abszisse die Zeit in min aufgetragen sind. Es ist ersichtlich, daß mit wachsender spezifischer Oberfläche $O_{sp}$ der Versteifungsbeginn zu kürzeren Zeiten verschoben wird. Durch den Zusatz von 0,02 M.-% Zitronensäuremonohydrat wird aber der Versteifungsbeginn einer Paste aus Calciumsulfat-Alphahalbhydrat mit einer spezifischen Oberfläche von 3000 cm²/g von ca. 7 min auf ca. 30 min verschoben.

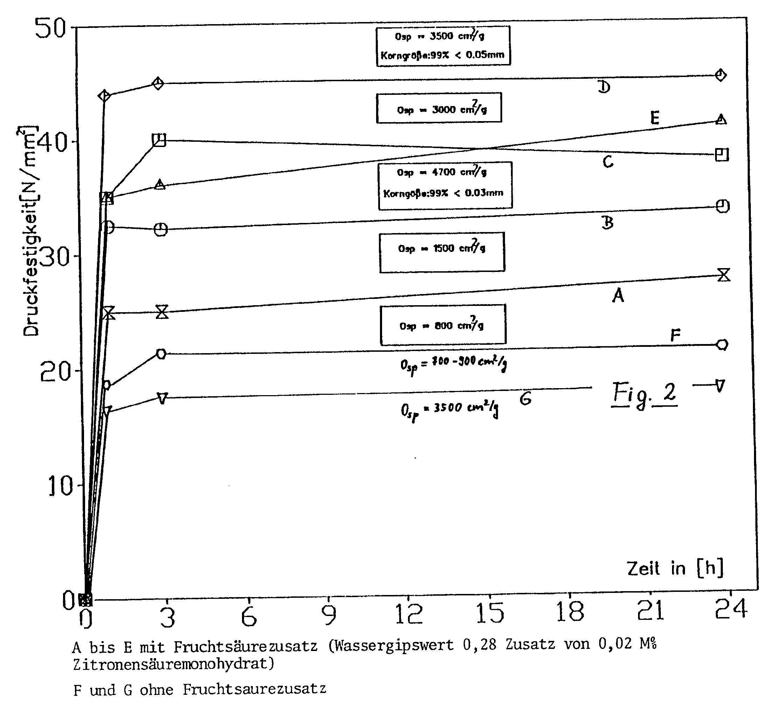

Wie sich aus Fig. 2 ergibt, beeinflußt die Mahlfeinheit die Festigkeitsentwicklung. In Fig. 2 ist auf der Ordinate die Druckfestigkeit in N/mm² und auf der Abszisse die Zeit in h aufgetragen, wobei die verschiedenen Kurven A bis E die Festigkeitsentwicklung für Pasten aus Calciumsulfat-Alphahalbhydrat mit den angegebenen spezifischen Oberflächen jeweils bei einem Zusatz von 0,02 M.-% Zitronensäuremonohydrat darstellen. Wie sich hieraus ergibt, führt Feinstkorn (spezifische Oberfläche 4700 cm²/g, Korngröße 99% unter 0,03 mm) zu einem Abfall der Druckfestigkeit gegenüber einer Bindemittelkörnung mit 3000 bzw. 3500 cm²/g. Der Wasserbedarf, ausgedrückt durch das Verhältnis von Wasser/Gips, beträgt in diesen Fällen jeweils 0,28.

Außerdem zeigt Fig. 2 zum Vergleich den Festigkeitsverlauf für eine Paste mit einer spezifischen Oberfläche von 700-900 cm²/g (Verhältnis von Wasser/Gips 0,31) sowie 3500 cm²/g (Verhältnis von Wasser/Gips 0,35), vgl. Kurven F, G, jedoch ohne Fruchtsäurezusatz. Hier liegen die erzielten Festigkeiten erheblich unter denen, die mit Fruchtsäurezusatz erreicht werden. Außerdem ist ersichtlich, daß ein Aufmahlen des grobkörnigen Materials den Festigkeitsverlauf bei fehlendem Fruchtsäurezusatz nachteilig beeinflußt.

Durch Verwendung von Calciumsulfat-Alphahalbhydrat mit unterschiedlichen Mahlfeinheiten läßt sich die Festigkeitsentwicklung entsprechend steuern.

Vorzugsweise wird die Fruchtsäure und/oder deren Salz dem gemahlenen und gesichteten Calciumsulfat-Alphahalbhydrat in feinteiliger Form beigemischt, es ist aber auch möglich, diese im Anmachwasser zu lösen und so die gewünschte Festigkeitsentwicklung und das erhöhte Festigkeitsniveau zu erreichen. Außerdem können Salze der Fruchtsäure bereits durch den vorgeschalteten Herstellungsprozeß in das Produkt eingebracht werden, indem die Fruchtsäure bzw. ihr Salz als wachstumsbeeinflussender Zusatz bei der Umkristallisation von Calciumsulfat-Dihydrat zu Alphahalbhydrat zugesetzt wird. Insbesondere eignet sich das Verfahren bei der Verwendung von Alphahalbhydrat, das durch Umkristallisation von Dihydrat im Autoklaven unter Verwendung eines wachstumsbeeinflussenden Zusatzes in Form von fein gemahlener Braunkohle und/oder Torf und/oder fein gemahlenem Holz und/oder Humussäure und/oder wirkungsgleiche Holzinhaltsstoffe, vorzugsweise mit einer Teilchengröße unter 100 µm, hergestellt wurde. Hierbei kann es sich um gemahlene Braunkohle in einer Menge von 0,1 bis 1,0 Masse%, vorzugsweise von 0,5 bis 0,7 Masse% handeln. Man kann den gemahlenen Torf in einer Menge von 0,1 bis 1,5 Masse%, vorzugsweise 0,5 bis 1 Masse%, einsetzen. Wirkungsgleiche Holzinhaltsstoffe meint auch gemahlenes Holz, welches in einer Menge von 0,3 bis 2,0 Masse%, vorzugsweise 0,7 bis 1,5 Masse% beigegeben wird. Humussäure kann in einer Menge von 0,1 bis 1,0 Masse%, vorzugsweise von 0,3 bis 7 Masse% als Holzinhaltsstoff beigegeben werden. Sulfitablauge funktioniert in einer Menge von 0,1 bis 3,0 Masse%, vorzugsweise von 0,5 bis 2 Masse%, als wachstumsbeeinflussender Zusatz. Auch wirkungsgleiche Inhaltsstoffe aus Sulfitablauge oder sekundäre Umwandlungsprodukte des nativen Lignins, wie beispielsweise Lignin-Sulfonsäure, sind in einer Menge von 0,1 bis 1,5 Masse%, vorzugsweise 0,3 bis 1,2 Masse% einsetzbar. Endlich kann es sich bei diesen Zusätzen um Lignin-Sulfonate in einer Menge von 0,1 bis 1,2 Masse%, vorzugsweise von 0,3 bis 0,8 Masse%, handeln. Eine weitere wachstumsbeeinflussende Maßnahme besteht darin, daß ein Teil des umzusetzenden Calciumsulfat-Dihydrats aus Rauchgasentschwefelungsgips einer mit Braunkohle befeuerten Kraftwerksanlage besteht, z.B. in einer Menge von mindestens 25 Masse%.

Das so aufbereitete Calciumsulfat-Alphahalbhydrat eignet sich insbesondere zur Herstellung pneumatisch förderbarer Spritzmörtel, die beim Austrag mit Wasser benetzt werden, etwa für sofort- oder frühtragende Dammbaustoffe für den untertägigen Bereich.

## Ansprüche

1. Verfahren zur Herstellung einer mit Wasser anmachbaren Alphahalbhydrat-Gipsmischung mit verzögertem Versteifungsbeginn und anschließender schneller Festigkeitsentwicklung,

wobei ein Ausgangs-Alphahalbhydrat gemahlen und das aufgemahlene Gut von störendem Feinstkorn durch Sichten befreit wird

und wobei das aufgemahlene Gut danach mit zumindest einer feinteiligen, den Versteifungsbeginn verzögernden Beeinflussungssubstanz versetzt wird, **dadurch gekennzeichnet,** daß als Ausgangs-Alphahalbhydrat Primärkorn-Alphahalbhydrat verwendet wird,

daß das Primärkorn-Alphahalbhydrat bestehend aus großen negelmäßigen Kristallen durch Mahlen und Sichten auf eine spezifische Oberfläche von 1.200 bis 4.000 cm²/g eingestellt wird,

und daß als Beeinflussungssubstanz lediglich wenigstens eine Fruchtsäure und/oder deren Salze in einer Menge von 0,005 bis 0,05 Masse% bezogen auf die Masse de gemahlenen und gesichteten Alphahalbhydrats zugesetzt werden.

2. Verfahren nach Anspruch 1, dadurch gekennzeichnet, daß das Primärkorn-Alphahalbhydrat auf eine spezifische Oberfläche von 1.500 bis 3.500 cm²/g eingesetzt wird.

3. Verfahren nach einem der Ansprüche 1 oder 2, dadurch gekennzeichnet, daß die Fruchtsäure und-/oder deren Salze in einer Menge von etwa 0,02 Masse% zugesetzt werden.

4. Verfahren nach einem der Ansprüche 1 bis 3, dadurch gekennzeichnet, daß als Fruchtsäure Zitronensäuremonohydrat zugesetzt wird.

5. Verfahren nach einem der Ansprüche 1 bis 4, dadurch gekennzeichnet, daß ein Primärkorn-Alphahalbhydrat eingesetzt wird, welches unter Verwendung eines wachstumsbeeinflussenden Zusatzes in Form von feingemahlener Braunkohle und/oder feingemahlenem Torf und/oder feingemahlenem Holz und/oder Humussäure und/oder wirkungsgleiche Holzinhaltsstoffe hergestellt wurde.

6. Verfahren nach einem der Ansprüche 1 bis 5, dadurch gekennzeichnet, daß ein Primärkorn-Alphahalbhydrat eingesetzt wird, welches zumindest unter teilweiser Verwendung von Calciumsulfat-Dihydrat, welches aus einer Rauchgasentschwefelungsanlage unter mit Braunkohle befeuerten Kraftwerksanlage stammt, hergestellt wurde.

7. Verwendung der nach einem der Ansprüche 1 bis 6 hergestellten Gipsmischung zur Herstellung von pneumatisch förderbarem Spritzmörtel, insbes. als Dammbaustoff in Untertagebetrieben, mit der Maßgabe, daß die Gipsmischung beim Austritt aus einer Förderleitung mit Wasser benetzt wird.

## Revendications

1. Procédé pour fabriquer un mélange de gypse semi-hydraté de type alpha, pouvant être gâché avec de l'eau, dont le début de solidification est retardé et dont la solidité se développe ensuite rapidement, et selon lequel on broie un semi-hydrate de type alpha de départ et on élimine par tamisage les grains gênants extrêmement fins, de la matière broyée, et selon lequel on mélange ensuite la matière broyée à au moins une substance d'influence finement divisée et retardant le début de la solidification, caractérisé en ce qu'on utilise comme semi-hydrate de type alpha de départ, un semi-hydrate de type alpha à grains primaires, on règle le semi-hydrate de type alpha à grains primaires, constitué par des cristaux de taille régulière, par broyage et tamisage, de manière qu'il possède une surface spécifique comprise entre 1200 et 4000 cm²/g, et qu'on ajoute en tant que substance d'influence, seulement au moins un acide produit par un fruit et/ou des sels de cet acide, en une quantité comprise entre 0,005 et 0,05% en masse, rapportés à la masse du semi-hydrate de type alpha broyé et tamisé.

2. Procédé selon la revendication 1, caractérisé en ce qu'on règle la surface spécifique du semi-hydrate de type alpha à grains primaires à une valeur comprise entre 1500 et 3500 cm²/g.

3. Procédé selon l'une des revendications 1 ou 2, caractérisé en ce qu'on ajoute de l'acide produit par un fruit et/ou des sels de cet acide en une quantité égale à environ 0,02% en masse.

4. Procédé selon l'une des revendications 1 à 3, caractérisé en ce qu'on ajoute, en tant qu'acide produit par un fruit, un monohydrate de l'acide citrique.

5. Procédé selon l'une des revendications 1 à 4, caractérisé en ce qu'on utilise un semi-hydrate de type alpha à grains primaires, qui a été fabriqué moyennant l'utilisation d'un additif influençant la croissance sous la forme de lignite finement broyée et/ou de tourbe finement broyée et/ou de bois finement broyé et/ou d'acide humique et/ou de substances à base de bois à effet équivalent.

6. Procédé suivant l'une des revendications 1 à 5, caractérisé en ce qu'on utilise un semi-hydrate de type alpha à grains primaires, qui a été fabriqué au moins moyennant l'utilisation partielle de sulfate de calcium dihydraté, qui provient d'une installation de désulfuration des gaz de fumée d'une centrale nucléaire consommant du lignite.

7. Utilisation du mélarnge de plâtre fabriqué selon l'une des revendications 1 à 6, pour la fabrication de mortier à projeter, notamment en tant que matériau de remblai dans des mines, moyennant le moulage du mélange de gypse à l'eau lors de sa sortie d'une conduite d'amenée.

## Claims

1. A process for the manufacture of an α-hemihydrate gypsum mixture that can be made up with water, with delayed commencement of setting and a subsequent rapid strength development,

in which an initial α-hemihydrate is milled and the milled product is freed form the deleterious finest grains by sieving,

and in which the milled product afterwards has added to it fine particles of at least one influencing substance that delays the commencement of setting, *characterized in that* primary grain α-hemihydrate is used as the initial α-hemihydrate,

that the primary grain α-hemihydrate, consisting of large regular crystals, is adjusted by milling and sieving to a specific surface of 1200 to 4000 cm²/g,

and that as influencing substance merely at least one fruit acid and/or its salts is added in a quantity of 0.005 to 0.05% by weight relatively to the weight of the milled and sieved α-hemihydrate.

2. A process according to Claim 1, *characterized in that* the primary grain α-hemihydrate is used with a specific surface of 1500 to 3500 cm²/g.

3. A process according to one of Claims 1 or 2, *characterized in that* the fruit acid and/or its salts is added in a quantity of about 0.02% by weight.

4. A process according to one of Claims 1 to 3, *characterized in that* citric acid monohydrate is added as the fruit acid.

5. A process according to one of Claims 1 to 4, *characterized in that* a primary grain α-hemihydrate is used that is manufactured making use of a growth-influencing addition in the form of finely milled brown coal and/or finely milled peat and/or finely milled wood and/or humic acid and/or component ; of wood having the same effect.

6. A process according to one of Claims 1 to 5, *characterized in that* a primary grain α-hemihydrate is used which has been produced using at least a proportion of calcium sulphate dihydrate that originates from a flue gas desulphurization plant in a brown-coal-fired power station.

7. The use of the gypsum mixture manufactured according to one of Claims 1 to 6 for the production of pneumatically-conveyable injection mortar, particularly as fill material in underground operations, with the proviso that the gypsum mixture is moistened with water on discharge from a conveyor pipe.

Fig. 1

Osp = 3000 cm²/g
(Zusatz:0.02M.-% ZMH)

Osp = 800 cm²/g

Osp =1500 cm²/g

alpha-Halbhydrat
(Osp = 3000 cm²/g)

Verstelfungsbeginn VB

Zeit [min]

Nadelabstand [mm]

Fig. 2

A bis E mit Fruchtsäurezusatz (Wassergipswert 0,28 Zusatz von 0,02 M%
Zitronensäuremonohydrat)

F und G ohne Fruchtsaurezusatz